# EUROPÄISCHE PATENTSCHRIFT

(11) **EP 1 751 904 B1**
(45) Veröffentlichungstag und Bekanntmachung des Hinweises auf die Patenterteilung: **26.06.2013**
(21) Anmeldenummer: 05744171.9
(22) Anmeldetag: 13.04.2005
(51) Int. Cl.: H04L 1/14

(54) **VERFAHREN UND VORRICHTUNG ZUR ANSTEUERUNG EINES MOBILFUNKENDGERÄTES, INSBESONDERE IN EINEM DRAHTLOS-MODUL ODER -TERMINAL, MIT RÜCKÜBERTRAGUNG VON VERWENDETEN STEUERBEFEHLEN**
METHOD AND DEVICE FOR CONTROL OF A MOBILE RADIO TERMINAL IN PARTICULAR IN A WIRELESS MODULE OR TERMINAL WITH BACK-TRANSMISSION OF APPLIED CONTROL COMMANDS
PROCEDE ET DISPOSITIF POUR COMMANDER UN TERMINAL DE TELEPHONIE MOBILE, EN PARTICULIER UN MODULE OU UN TERMINAL HERTZIEN, AVEC RETRANSMISSION D'ORDRES DE COMMANDE UTILISES

(30) Priorität: 22.04.2004 DE 102004020653
(43) Veröffentlichungstag der Anmeldung: 14.02.2007
(73) Patentinhaber: Cinterion Wireless Modules GmbH, 81541 München (DE)
(72) Erfinder: BRAUNE, Martin, 13156 Berlin (DE); MEIER, Thomas, 13357 Berlin (DE)
(74) Vertreter: Eisenführ, Speiser & Partner
(86) Internationale Anmeldenummer: PCT/DE2005/000697
(87) Internationale Veröffentlichungsnummer: WO 2005/104420

(56) Entgegenhaltungen:
- PATENT ABSTRACTS OF JAPAN Bd. 2000, Nr. 23, 10. Februar 2001 (2001-02-10) -& JP 2001 154986 A (DENSO CORP), 8. Juni 2001 (2001-06-08)
- PATENT ABSTRACTS OF JAPAN Bd. 010, Nr. 020 (E-376), 25. Januar 1986 (1986-01-25) -& JP 60 180255 A (FUJITSU KK), 14. September 1985 (1985-09-14)

## Beschreibung

Verfahren und Vorrichtung zur Ansteuerung eines Mobilfunkendgerätes, insbesondere in einem Drahtlos-Modul oder -Terminal, mit Rückübertragung von verwendeten Steuerbefehlen.

Die Erfindung betrifft gemäß dem Oberbegriff des Anspruchs 1 ein Verfahren zur Ansteuerung eines Mobilfunkendgerätes, insbesondere in einem Drahtlos-Modul oder -Terminal, mit Rückübertragung von verwendeten Steuerbefehlen, bei dem eine Steuerungs-Befehlssequenz über eine Steuerungsschnittstelle in einen Terminaladapter eingelesen, von diesem umgesetzt und in Form von internen Steuerbefehlen an das Mobilfunkendgerät weitergeleitet wird und eine Echo-Befehlssequenz über die Steuerungsschnittstelle rückübertragen wird, um eine Überprüfung der Übertragung der Steuerungs- Befehlssequenz an das Mobilfunkendgerät zu ermöglichen. Die Erfindung betrifft auch eine Adaptereinrichtung gemäß dem Oberbegriff des Anspruchs 7 für ein Mobilfunkendgerät

Drahtlos-Module oder -Terminals ("wireless modules", "wireless terminals") bestehen aus einem Mobilfunkendgerät bzw. einer Mobilfunkeinheit mit integrierter Antenne oder Antennenanschluss und einer Adaptereinrichtung zur Übermittlung von Steuerbefehlen zwischen Modul und einer Steuereinrichtung. Module/Terminals werden in Vorrichtungen wie Maschinen, Automaten, Containern eingesetzt, um Mess- und Steuerungsdaten zwischen einer lokalen Steuerungseinrichtung und einer entfernten Steuerungszentrale zu übertragen. Von den zahlreichen Anwendungsbereichen seien beispielhaft Flottenmanagement, Verkehrssteuerung, Automatensteuerung (beispielsweise von Waren- und Verkaufsautomaten), Frachtverfolgungssysteme, Sicherheitssysteme und die entfernte Überwachung von Maschinen genannt.

Vorteilhaft erfolgt die Übertragung der Mess- und Steuerungsdaten zwischen dem Modul bzw. Terminal und der festen Steuerungszentrale über drahtlose Schnittstellen, beispielsweise WLAN-Verbindungen, bei großen Entfernungen jedoch insbesondere über Mobilfunkverbindungen

Drahtlos-Module, die mit Mobilfunkendgeräten ausgeführt sind, können etwa auf der GSM- und/oder GPRS-Technologie aufsetzen. Ihre Ansteuerung erfolgt hierbei häufig über AT-Kommandos, die in der GSM-Spezifikation 07.07 der ETSI (bzw. 3GPP TS 07.07) sowie der ITU-T-Empfehlung V.25ter spezifiziert sind. Die Ansteuerung erfolgt von der als "Terminal Equipment" (TE) bezeichneten Steuereinrichtung, beispielsweise einen Mikroprozessor, und in der Regel über eine serielle Schnittstelle, etwa gemäß dem V.24-Standard oder über eine Infrarotverbindung wie IrDA oder eine vergleichbare Verbindung.

Im Befehlssatz ist die Möglichkeit vorgesehen, dass das Modul die Zeichen der übertragenen Kommandos über die AT-Schnittstelle zurück überträgt, bspw. um eine Überprüfung der Übertragung der Kommandos an das Modul bzw. Mobilfunkendgerät zu ermöglichen. Mit dem Befehl E[cho] der V.25ter kann dieses "echoeing back" von an das Mobilfunkendgerät übertragenen Befehlen ein- und ausgeschaltet werden.

Die Zeichen der zurückübertragenen Kommandos können über die Steuereinrichtung direkt auf ein Terminal ausgegeben werden, bspw. mittels eines Terminalprogramms. Oder die rückübertragenen Befehlssequenzen werden in einer Log-Datei für die spätere Auswertung aufgezeichnet.

Bei der Ansteuerung der GSM/GPRS-Module bzw. -Terminals über AT-Kommandos ist häufig eine Authentifizierung der Steuereinrichtung gegenüber dem Modul erforderlich, indem beispielsweise die PIN ("Personal Identity Number") der SIM("Subscriber Identity Module")-Karte des Moduls eingegeben wird. Im AT-Befehlssatz ist der Befehl "+CPIN" im Zusammenhang mit der Eingabe derartiger PINs bzw. von Passwörtern vorgesehen.

Hierbei tritt das Problem auf, dass die dem Modul eingegebenen PINs bzw. allgemein die zur Identifizierung verwendeten Zeichenfolgen nach der Rückübertragung über die AT-Schnittstelle im Klartext darstellbar sind. Die PINs erscheinen also für jedermann lesbar beispielsweise auf einem Bildschirm bzw. einer Anzeige der Steuereinrichtung. Ebenso werden die PINs beispielsweise in einer Log-Datei gespeichert, die die durch die Steuereinrichtung ausgeführten bzw. abgearbeiteten Steuerungsvorgänge des Moduls zur späteren Anzeige oder für Auswertungs- und Nachweiszwecke speichert. Über diese Datei können die PINs ebenfalls im Klartext erkannt und bspw. ausgelesen werden. Hierbei besteht die Gefahr, dass Unbefugte sich durch Zugriff auf sicherheitskritische PINs oder Passwörter Zugang zu den Modulen bzw. Terminals verschaffen.

Auf der AT-Schnittstelle ist dieses Problem ungelöst, da die GSM-Spezifikation 07.07 hierzu keine Angaben macht.

Bei interaktiven Anwendungen zur Steuerung der Module könnte ein Bediener, nachdem er eine Aufforderung zur PIN- bzw. Passworteingabe erhalten hat, über das Betriebssystem das Terminal Echo abschalten. Hierzu wird beispielsweise unter Windows der Befehl "echo off" bereitgestellt. Hiernach wird die PIN oder das Passwort eingelesen, ohne dass eine Anzeige am Schirm erfolgt. Schließlich wird das Terminal Echo wieder angeschaltet ("echo on").

Dieses interaktive Vorgehen ist jedoch im vorliegenden Fall nicht praktikabel, weil die AT-Befehle zur Ansteuerung des GSM/GPRS-Moduls in der Regel nicht interaktiv eingegeben werden. Vielmehr werden die Befehlssequenzen zur Steuerung des Moduls bzw. Terminals meist automatisiert abgearbeitet, bspw. wenn die Steuereinrichtung bzw. das TE zusammen mit dem Modul in einem Automaten bzw. einer Maschine untergebracht ist.

Darüber hinaus unterdrückt ein "echo off" (auch der "E"-Befehl gem. V.25ter) ganze Befehlssequenzen. Damit sind auch die Kommandos selbst und nicht nur die übergebenen Parameter (PINs) nicht mehr erkennbar, was eine spätere Auswertung der Befehlssequenzen erschwert.

Insofern sind auch in JP2001154986A und JP 60180255A vorgeschlagene automatisierte Lösungen nachteilig, da bei diesen ebenfalls eine ganze Passwort- oder Befehlssequenz gelöscht wird.

Somit besteht die Aufgabe der vorliegenden Erfindung darin, ein Verfahren zur Steuerung eines Mobilfunkendgerätes, insbesondere in einem Drahtlos-Modul oder -Terminal, mit Rückübertragung von Befehlssequenzen vorzuschlagen, mittels dessen eine geschützte Eingabe von PINs, Passwörtern oder dergleichen sicherheitskritischen Zeichenfolgen möglich ist, sowie eine entsprechende Vorrichtung vorzuschlagen.

Diese Aufgabe wird durch ein Verfahren mit den Merkmalen des Anspruchs 1 sowie eine Adaptereinrichtung mit den Merkmalen des Anspruchs 7 gelöst.

Ein wesentlicher Gedanke der Erfindung besteht darin, die vom Modul eingelesenen Befehlssequenzen vor der Rückübertragung auf das Vorkommen von Befehlen hin zu überprüfen, denen bei korrekter Syntax in einer Befehlssequenz PINs oder Passwörter zugeordnet sind. Beispielsweise könnte bei Verwendung des AT- Befehlssatzes nach dem kritischen Befehl bzw. der kritischen Zeichenfolge "+CPIN=" gesucht werden.

Sodann wird in einem zweiten Schritt die (üblicherweise dem kritischen Befehl nachfolgende) Zeichenfolge, die eine PIN oder ein Passwort spezifiziert, ersetzt, bevor die maskierte Echo-Befehlssequenz an die das Modul steuernde Einrichtung zurückgesendet wird. So kann beispielsweise festgelegt werden, dass bei jedem detektierten Auftreten des Ausdrucks "+CPIN=" mindestens ein nachfolgendes Zeichen durch einen Platzhalter, beispielsweise '*', ersetzt wird. Hierdurch kann vorteilhaft und auf einfache Weise sichergestellt werden, dass die zur Authentifizierung bzw. Autorisierung gegenüber dem Modul bzw. Terminal verwendeten Zeichenfolgen nach der Rückübertragung über die zur Ansteuerung verwendet Schnittstelle nicht auf mittelbar oder unmittelbar mit der Steuereinrichtung des Moduls verbundenen Ausgabegeräten erscheinen, wie Bildschirmen oder Dateien, insbesondere Log-Dateien.

Konkret wird ein Verfahren zur Ansteuerung eines Mobilfunkendgerätes, insbesondere in einem Drahtlos-Modul oder -Terminal, mit Rückübertragung von verwendeten Steuerbefehlen vorgeschlagen, bei dem eine über eine Steuerungsschnittstelle übertragene Steuerungs-Befehlssequenz als Einlese-Befehlssequenz in einen Terminaladapter eingelesen, umgesetzt und in Form von internen Steuerbefehlen an das Mobilfunkendgerät weitergeleitet wird. Weiterhin wird eine Echo-Befehlssequenz über die Steuerungsschnittstelle vom Mobilfunkendgerät zurück übertragen. Dabei repräsentiert die Echo-Befehlssequenz die Einlese-Befehlssequenz, um eine Überprüfung der Übertragung der Steuerungs-Befehlssequenz an das Mobilfunkendgerät zu ermöglichen.

Erfindungsgemäß wird eine Kopier-Befehlssequenz als Kopie der Einlese-Befehlssequenz erstellt. Die Kopier-Befehlssequenz wird von einer Maskierungseinheit des Mobilfunkendgerätes bearbeitet. Die Maskierungseinheit
- durchsucht die Kopier-Befehlssequenz auf eine vorgegebene kritische Zeichenfolge hin,
- bestimmt in Reaktion auf den Nachweis der kritischen Zeichenfolge nach einem vorgegebenen Algorithmus mindestens ein Zeichen der Kopier-Befehlssequenz, und
- ersetzt das bestimmte Zeichen durch ein anderes vorgegebenes Maskierungszeichen.
Die solcherart maskierte Kopier-Befehlssequenz wird sodann als Echo-Befehlssequenz über die Steuerungsschnittstelle rückübertragen.

Das erfindungsgemäße Verfahren erlaubt eine Lösung der oben angegebenen Aufgabe, ohne dass eine Modifikation eines herkömmlichen Protokolls für die Steuerungsschnittstelle erforderlich ist.

Im erfindungsgemäßen Verfahren werden in der Echo-Befehlssequenz innerhalb eines Befehls mindestens ein Zeichen im Klartext und mindestens ein weiteres Zeichen maskiert dargestellt. So kann etwa die kritische Zeichenfolge weiterhin erkennbar bleiben, was die spätere Auswertung der maskierten Befehlssequenzen erleichtert, etwa im Vergleich zu durch ein ausgeschaltetes Terminal Echo maskierten Befehlssequenzen.

In weiteren Ausführungsformen des erfindungsgemäßen Verfahrens ist als kritische Zeichenfolge eine Zeichenfolge vorgegeben, der gemäß einer vorgegebenen Befehlssyntax für die Steuerungs-Befehlssequenz eine Identifizierungszeichenfolge in der Steuerungs-Befehlssequenz zugeordnet ist, wobei die Identifizierungszeichenfolge insbesondere eine PIN oder ein Passwort für den Zugriff auf Funktionalitäten des Mobilfunkendgerätes betrifft.

In diesen Ausführungsformen wird das erfindungsgemäße Verfahren vorteilhaft zur Maskierung von PINs oder Passwörtern eingesetzt. Im Grundsatz können jedoch beliebige Zeichenfolgen maskiert werden, beispielsweise auch Schlüssel für verwendete Verschlüsselungsalgorithmen. Weiterhin muss nicht die gesamte Identifizierungszeichenfolge maskiert werden, u.U. ist es ausreichend, von einem etwa vier Zeichen umfassenden Passwort nur drei Zeichen zu maskieren, um beispielsweise eine erleichterte Überprüfung der abgearbeiteten Befehlssequenzen zu ermöglichen.

In weiteren Ausführungsformen des erfindungsgemäßen Verfahrens bestimmt die Maskierungseinheit das oder jedes zu ersetzende Zeichen relativ zu der Position der kritischen Zeichenfolge. Hierbei kann es sich insbesondere bei dem oder jedem zu ersetzenden Zeichen in der Befehlssequenz um eines handeln, das der kritischen Zeichenfolge unmittelbar nachfolgt. Durch die Bestimmung der zu ersetzenden Zeichen relativ zu der Position der kritischen Zeichenfolge wird es möglich, die

Maskierung unabhängig von Formatierungen der Steuerungs- bzw. Einlese-Befehlssequenz, beispielsweise der Aneinanderreihung einer Mehrzahl von Befehlen in einer Zeile, vorzunehmen.

In weiterentwickelten Verfahren bestimmt die Maskierungseinheit als zu ersetzendes Zeichen ein Zeichen der Identifizierungszeichenfolge. Hierdurch kann vorteilhaft eine zusätzliche Überprüfung erfolgen, um zu verhindern, dass nicht nur Zeichen maskiert werden, die der Identifizierungszeichenfolge angehören, sondern fehlerhaft auch Zeichen bereits etwa dem nachfolgenden Kommando zugehören. So kann etwa überprüft werden, ob es sich bei dem potentiell zu ersetzenden Zeichen um eine Ziffer handelt (dann ist die Wahrscheinlichkeit hoch, dass dieses Zeichen noch der PIN zugehörig ist), oder um ein Steuerzeichen (etwa das "+"-Zeichen), welches mit hoher Wahrscheinlichkeit bereits dem nachfolgenden Kommando angehört.

Gegenüber dem bekannten Verfahren, bei dem ein Terminal Echo ausgeschaltet wird, um die Ausgabe eines Passwortes oder einer PIN zu verhindern, bietet das erfindungsgemäße Verfahren allgemein den Vorteil, dass nur die tatsächlich zu schützenden Zeichen verdeckt bzw. maskiert werden, nämlich die der Identifizierungszeichenfolge. Die kritische Zeichenfolge, also die eigentlichen Kommandos bzw. Befehle bleiben weiterhin erkennbar, was etwa die spätere Auswertung der Log-Datei im Ereignisspeicher für Zwecke der Fehlerverfolgung, Wartung oder dergleichen administrative Aufgaben erleichtert.

In weiteren Ausführungsformen des erfindungsgemäßen Verfahrens wird als Maskierungszeichen ein Platzhalterzeichen, insbesondere ein '*', ein Leerzeichen oder ein Länge-Null-Zeichen verwendet. Bei letzterem handelt es sich um ein Zeichen der Länge Null, d.h. das nachfolgende Zeichen wird bei der gleichen Position dargestellt wie das Länge-Null-Zeichen selbst. In einer Darstellung der rückübertragenen Echo-Befehlssequenz am Bildschirm würde also das maskierte Passwort bzw. die maskierte PIN gar nicht mehr auftauchen, auch nicht in Form von Leerzeichen.

In weiterhin bevorzugten Ausführungsformen des erfindungsgemäßen Verfahrens wird in der maskierten Echo-Befehlssequenz innerhalb eines Befehls das Befehlsschlüsselwort im Klartext und die Identifizierungszeichenfolge maskiert dargestellt. Somit bleiben die Kommando-Schlüsselwörter, wie etwa ein '+CPIN=' weiterhin erkennbar, während nur die tatsächlich zu maskierenden Informationen, nämlich die Zeichen, welche die PIN oder das Passwort tatsächlich repräsentieren, maskiert werden.

Die Vorteile und Zweckmäßigkeiten einer erfindungsgemäßen Vorrichtung gemäß dem Anspruch 7 ergeben sich aus den Vorteilen und Zweckmäßigkeiten des erfindungsgemäßen Verfahrens. Eine erfindungsgemäße Adaptereinrichtung für ein Mobilfunkendgerät, insbesondere in einem Drahtlos-Modul oder -Terminal, verfügt herkömmlich über eine erste Empfangseinheit, um eine über eine Steuerungsschnittsteile erhaltene Einlese-Befehlssequenz einzulesen, eine erste Umsetzungseinheit, um Befehle aus der Einlese- Befehlssequenz in Steuerbefehle umzusetzen, eine erste Sendeeinheit, um die Steuerbefehle an eine Mobilfunkeinheit des Mobilfunkendgerätes zu übermitteln, eine Kopiereinheit, um eine Kopier-Befehlssequenz als Kopie der Einlese-Befehlssequenz zu erstellen, und eine zweite Sendeeinheit, um eine die Kopier-Befehlssequenz repräsentierende Echo-Befehlssequenz über die Steuerungsschnittstelle zurück zu übertragen.

Eine erfindungsgemäße Vorrichtung verfügt ferner über eine zwischen Kopiereinheit und zweiter Sendeeinheit geschaltete Maskierungseinheit mit - einem Einleseblock, um die Kopier-Befehlssequenz einzulesen, - einem Durchsuchungsblock, um die Kopier-Befehlssequenz auf eine vorgegebene kritischen Zeichenfolge hin zu durchsuchen,
- einem Zeichenbestimmungsblock, um in Reaktion auf den Nachweis der kritischen Zeichenfolge nach einem vorgegebenen Algorithmus mindestens ein Zeichen der Kopier-Befehlssequenz zu bestimmen, um die solcherart maskierte Kopier-Befehlssequenz als Echo-Befehlssequenz in der innerhalb eines Befehls mindestens ein Zeichen im Klartext und mindestens ein weiteres Zeichen maskiert dargestellt ist, zur Verfügung stellen,
- einem Übergabeblock, um die Echo-Befehlssequenz so an die zweite Sendeeinheit zu übergeben

Die Maskierungseinheit kann in Form von Software, Firmware, Hardware oder einer Kombination hiervon vorliegen.

Weitere Aspekte, Vorteile und Zweckmäßigkeiten der Erfindung werden in der nachfolgenden Beschreibung eines Ausführungsbeispiels deutlich, die anhand der beigefügten Figuren e folgt. Von denen zeigt:
Fig. 1 eine Anordnung zur Steuerung eines Drahtlos-Terminals mit erfindungsgemäßer Adaptereinrichtung,
Fig. 2 eine Ausgabe einer Folge von Befehlssequenzen auf ein Terminal gemäß dem Stand der Technik und
Fig. 3 eine Ausgabe einer Folge von Befehlssequenzen analog zu derjenigen der Fig. 2 nach der Verarbeitung durch die erfindungsgemäße Vorrichtung der Fig. 1.

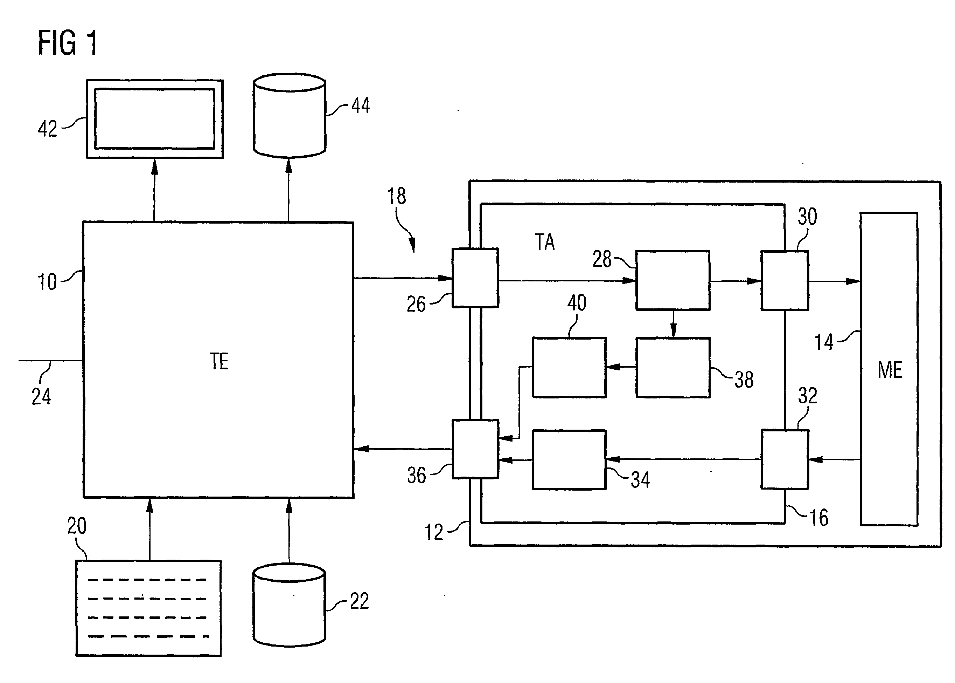

In Fig. 1 sind in Form eines funktionalen Blockschaltbildes die wesentlichen Komponenten einer Steuereinrichtung 10 zur Ansteuerung eines Drahtlos-Moduls 12 dargestellt. Letzteres verfügt über eine Mobilfunkeinheit 14 zur Herstellung von Verbindungen zu einem (nicht gezeigten) GSM-Mobilfunknetz (es könnte sich auch um ein GPRS-Netz handeln).

Die Einheit 14 entspricht dem "Mobile Equipment" (ME) der GSM-Spezifikation 07.07 und verfügt entweder über eine eingebaute Mobilfunkantenne (nicht gezeigt) oder einen am Modul 12 nach außen geführten Antennenanschluss zum Anschluss einer externen Antenne.

Weiterhin liegt in dem Modul 12 ein Adapter 16 vor ("Terminal Adapter", TA, gemäß GSM 07.07). Steuereinrichtung 10 und GSM-Modul 12 befinden sich als jeweils separate Einrichtungen gemeinsam in einem Verkaufsautomaten (es könnte sich jedoch ebenso um ein Fahrzeug, einen Stromzähler, eine Wetterstation oder dergleichen mobile und/oder aus der Ferne zu wartende Einrichtung handeln), so dass die Kommunikation über die AT-Schnittstelle 18 zwischen beiden Einrichtungen ohne weiteres über die V.24-Schnittstelle zu bewerkstelligen ist. Daher verfügt der Adapter 16 über eine serielle Schnittstelle gemäß V.24 zur Verbindung mit der Steuereinrichtung 10.

Über die Schnittstelle 18 werden AT-Kommandos gemäß GSM 07.07 zwischen der Steuereinrichtung 10 und dem GSM-Modul 12 ausgetauscht. Genauer gesagt werden Steuerungs-Befehlssequenzen, also Folgen von AT-Kommandos bzw. -Befehlen von der Einrichtung 10 an das Modul 12 gesendet, die die empfangenen Befehle als Echo-Befehlssequenzen rückübermittelt. Zusätzlich werden über die AT-Schnittstelle auch Informationen, die die Ausführung der gesendeten AT-Befehle betreffen, an die Steuereinrichtung 10 gesendet.

Befehlssequenzen zur Steuerung des Moduls 12 können der Steuereinrichtung 10 über eine zu Wartungszwecken anschließbäre Tastatur 20 eingegeben werden. Die zur automatischen Ansteuerung benötigten Steuerungs-Befehlssequenzen liegen in einer Speichereinheit 22 gespeichert vor. Die Sequenzen werden von der Steuereinrichtung 10 entweder durch Eingabe eines Tastaturbefehls oder bei automatischer Ansteuerung bei Eintritt einer bestimmten Bedingung eingelesen.

Beispielsweise gelangt die Information, dass einer der Warenschächte leer ist, über eine Messleitung 24 zu der Steuereinrichtung 10. In Reaktion hierauf wird ein Skript mit einer Folge oder Sequenz von AT-Befehlen aus dem Speicher 22 ausgelesen, um das GSM-Modul 12 zu aktivieren und dieses zu einer über das Mobilfunknetz abgesetzten Meldung an eine Zentrale bezüglich des leeren Warenschachtes zu veranlassen.

Die über die Tastatur 20 oder den Speicher 22 eingelesenen AT-Befehle werden hierzu über die AT-Schnittstelle 18 an den Terminaladapter 16 übertragen. Hier werden die AT- bzw. Steuerungs-Befehlssequenzen von einer an die AT-Schnittstelle 18 angepassten Empfangseinheit 26 empfangen und in Form von Einlese-Befehlssequenzen einer ersten Umsetzungseinheit 28 übergeben. Diese entnimmt die einzelnen Befehle aus der Einlese-Befehlssequenz und setzt diese in interne Steuerbefehle um. Die internen Steuerbefehle werden an eine erste Sendeeinheit 30 übergeben, die die Steuerbefehle an die Mobilfunkeinheit 14 weiterleitet. Auf diese Weise wird die Mobilfunkeinheit 14 entsprechend den übertragenen AT-Befehlen angesteuert.

die Mobilfunkeinheit 14 reagiert ggf. mit Statusmeldungen oder sonstigen Reaktionsmeldungen auf die übergebenen internen Steuerbefehle. Diese werden von einer zweiten Empfangseinheit 32 empfangen und einer zweiten Umsetzungseinheit 34 übergeben. Diese setzt die Meldungen in AT-Antwortsequenzen um und liefert diese an eine zweite Sendeeinheit 36. Diese überträgt die übergebene Befehlssequenz über die AT-Schnittstelle 18 an die Steuereinrichtung 10, wo eine manuelle oder automatische Überprüfung und ggf. angepasste erneute Ansteuerung erfolgt.

Weiterhin liegt der ersten Umsetzungseinheit 28 zugeordnet eine Kopiereinheit 38 im Adapter 16 vor, die durch einen "E"-Befehl gem. V.25ter aktiviert bzw. deaktiviert wird. Im Aktivierungsfall kopiert die Kopiereinheit 38 die Zeichen der Einlese-Befehlssequenz und erstellt so eine Kopier-Befehlssequenz. Herkömmlich werden die Zeichen der Kopier-Befehlssequenzen von der aktivierten Kopiereinheit 38 direkt der zweiten Sendeeinheit 36 übergeben. Dabei werden die Zeichen der Einlese-Befehlssequenz bevorzugt zeichenweise von der Kopiereinheit 38 kopiert und der Einheit 36 übergeben; es ist jedoch grundsätzlich auch denkbar, dass die kopierten Zeichen etwa sequenzweise weitergeleitet werden.

Die Sendeeinheit 36 überträgt die Zeichen der Kopier-Befehlssequenz als Echo-Befehlssequenz über die AT-Schnittstelle 18 an die Steuereinrichtung 10 zurück. Hier ist dann bspw. eine Überprüfung möglich, ob die Steuerungs-Befehlssequenz vom Modul 12 (korrekt) empfangen worden ist.

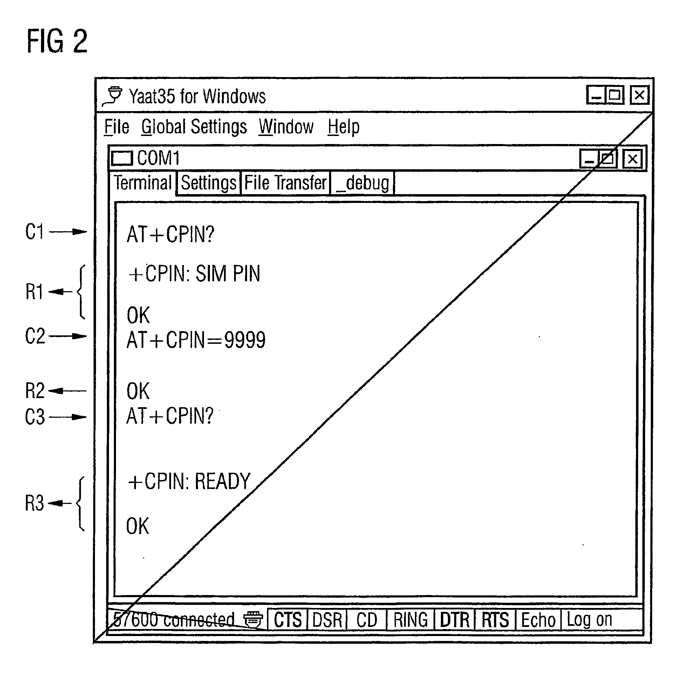

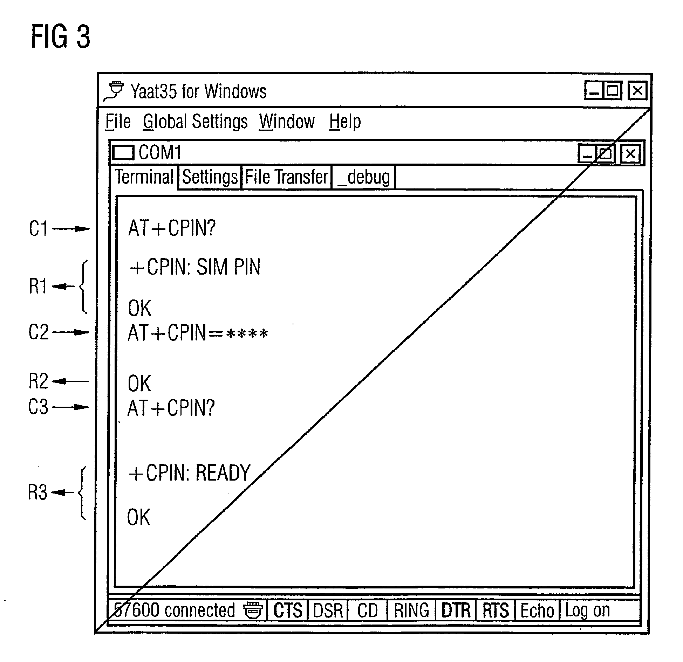

Erfindungsgemäß wird die Kopier-Befehlssequenz von der Kopiereinheit 38 zunächst an eine Maskierungseinheit 40 übergeben, die die von ihr bearbeitete Sequenz als maskierte Kopier-Befehlssequenz an die Sendeeinheit 36 weiterleitet. Die Arbeitsweise der Einheit 40 wird unten anhand der Figuren 2 und 3 genauer beschrieben.

Die rückübermittelten Zeichen der Echo-Befehlssequenzen werden über die Steuereinrichtung 10 an unterschiedliche Ausgabegeräte ausgegeben. In dem Ausführungsbeispiel der Fig. 1 sind ein Terminal bzw. Anzeigefenster 42 sowie ein Ereignisspeicher 44 zur Ausgabe der Echo-Daten angeschlossen.

Die Fig. 2 zeigt die Ausgabe einer Echo-Befehlssequenz mit zusätzlichen AT-Antworten über ein Terminalprogramm auf der Anzeige 42 nach dem Stand der Technik, d. h. bei aktivierter Kopiereinheit 38, jedoch ohne Vorliegen einer Maskierungseinheit 40. Die von der Steuereinheit 10 an das GSM-Modul 12 übermittelte und als Echo wieder ausgegebene Sequenz beginnt mit einem Kommando C1. Mit diesem wird das Modul 12, d.h. letztlich die Mobilfunkeinheit 14 aufgefordert, anzugeben, ob eine Authentifizierung der Steuereinrichtung 10 gegenüber dem Modul 12, d. h. die Eingabe einer PIN, erforderlich ist, bevor Steuerbefehle vom Modul 12 akzeptiert werden.

Das Modul 12 reagiert hierauf mit der Antwort R1, die die Information enthält, dass die PIN-Nummer der in der Mobilfunkeinheit 14 vorliegenden SIM-Karte zu senden ist. Die Steuereinheit 20 sendet daraufhin ein Kommando C2, nämlich den für diesen Fall vorgesehenen AT-Befehl mit dem Befehlsschlüsselwort "+CPIN=", an das Modul 12. Gemäß GSM 07.07 wird diesem Befehlsschlüsselwort die angeforderte SIM-PIN-Nummer als Zeichenkette '9999' nachgestellt.

Die Zeichen des Befehls C2 werden über die Kopiereinheit 38 kopiert und als Echo-Zeichen von der Steuereinrichtung 10 wieder empfangen. Da die GSM-Spezifikation 07.07 keine Möglichkeit der verdeckten Darstellung der PIN vorsieht, erscheint so die PIN auf der Anzeige 42 in Fig. 2 im Klartext. In gleicher Weise wird die PIN auch in der auf dem Ereignisspeicher 44 vorliegenden Log-Datei gespeichert und ist hierüber jederzeit auslesbar.

In dem anhand der Fig. 2 geschilderten Beispiel ist die gesendete PIN korrekt, was durch die Antwortsequenz R2 der Steuereinrichtung 10 mitgeteilt wird. Ein erneutes Senden des Kommandos C1 als Kommando C3 zur Überprüfung ergibt nunmehr als Ergebnis, dass das Modul 12 bereit ist, Steuerungsbefehle von der authentifizierten Steuerungsvorrichtung 10 entgegenzunehmen.

Anhand der Fig. 3 wird jetzt eine zu dem anhand der Fig. 2 geschilderten Vorgang analoge Steuerungsprozedur durchgeführt, bei der die über die AT-Schnittstelle 18 (vgl. Fig. 1) gesendeten Steuerungs-Befehlssequenzen identisch sind. Jedoch werden die von der Kopiereinheit 38 erstellten Kopier-Befehlssequenzen erfindungsgemäß durch die Maskierungseinheit 40 bearbeitet.

In der Maskierungseinheit 40, die softwaremäßig gemeinsam mit den ebenfalls in Form von Software vorliegenden Umsetzungs- und Kopiereinheiten 28, 34 und 38 auf einem gemeinsamen Mikroprozessor implementiert ist bzw. ausgeführt wird, wird jede von der Kopiereinheit übergebene bzw. eingelesene Kopier-Befehlssequenz (d.h. die Zeichenfolge, die die Befehlssequenz repräsentiert) auf das Vorkommen eines vorgegebenen Befehlsschlüsselwortes, nämlich eines kritischen Ausdrucks "+CPIN=" durchsucht.

Eine solche Sequenz bzw. ein solches Schlüsselwort taucht in dem Kommando C1 nicht auf. Daraufhin werden diese von der Maskierungseinheit 40 unverändert an die angeschlossene Sendeeinheit 36 ausgegeben.

Im Befehl C2 tritt die kritische Zeichenfolge auf. Die Einheit 40 ist in diesem Beispiel in der Weise programmiert, dass sie das unmittelbar auf den kritischen Ausdruck folgende Zeichen daraufhin untersucht, ob es sich um eine Ziffer handelt. Ist dieses der Fall, handelt es sich um ein Zeichen der PIN, da per Festlegung durch den Mobilfunknetzbetreiber, der die SIM-Karte ausgegeben hat, jede SIM-PIN nur aus Ziffern besteht, AT-Kommandos aber keine Ziffern enthalten. Daher wird das behandelte Zeichen durch das vorgegebene Zeichen '*' ersetzt.

Sodann wird das unmittelbar nachfolgende Zeichen in der gleichen Weise untersucht. In dem Beispiel der Fig. 3 handelt es sich bei den vier auf den Ausdruck "+CPIN=" unmittelbar folgenden Zeichen jeweils um Zeichen, die der PIN zugehörig sind, nämlich jeweils die Ziffer 9 (vgl. Fig. 2). Das fünfte Zeichen ist ein (in der Darstellung der Fig. 2 und 3 nicht wiedergegebenes) Zeilenende- bzw. CR-Zeichen. Da es sich hierbei nicht um eine Ziffer handelt, das Zeichen folglich nicht mehr der PIN zugehörig ist, wird der oben geschilderte Maskierungsalgorithmus beendet.

Die nachfolgend untersuchte Sequenz C3 enthält den kritischen Ausdruck nicht, daher werden in dieser Sequenz keine Zeichen verdeckt bzw. maskiert.

Die Zeichen der Sequenzen C1 bis C3 werden von der Maskierungseinheit 40 an die Sendeeinheit 36 übergeben, von wo aus sie als Echo-Befehlssequenzen in herkömmlicher Weise an die Steuereinrichtung 10 übertragen und von dieser auf die Anzeigeeinheit 42, wie in Fig. 3 zu sehen, sowie den Ereignisspeicher 44 ausgegeben werden. Da die sicherheitskritischen Zeichen des Befehls C2 in der rückübertragenen Echo-Befehlssequenz nicht mehr enthalten sind, sondern durch Platzhalter ersetzt sind, kann die PIN der SIM-Karte der Mobilfunkeinheit 14 weder von der Anzeige 42 noch aus der in dem Speicher 44 abgelegten Log-Datei entnommen werden. Ein Missbrauch ist somit ausgeschlossen.

Gegenüber dem bekannten Verfahren, bei dem ein Terminal Echo ausgeschaltet wird, um die Ausgabe eines Passwortes oder einer PIN zu verhindern, dass bei automatisierten Verfahren wie hier geschildert nicht praktikabel anwendbar ist, bietet das erfindungsgemäße Verfahren den Vorteil, dass nur die tatsächlich zu schützenden Zeichen verdeckt bzw. maskiert werden. Die Kommando-Schlüsselworte selbst, etwa der Ausdruck "+CPIN=" bleiben weiterhin erkennbar, was etwa die spätere Auswertung der Log-Datei im Ereignisspeicher für Zwecke der Fehlerverfolgung, Wartung oder dergleichen administrative Aufgaben erleichtert: Es werden nicht eine oder mehrere Kommandos oder Zeilen aus den Befehlssequenzen gelöscht, sondern nur einige Zeichen innerhalb eines einzelnen Kommandos.

Die Erfindung ermöglicht die geschützte Eingabe von PINs oder Passwörtern, ohne dass eine Modifikation der SteuerungsSchnittstelle, d.h. etwa des AT-Befehlssatzes, erforderlich wäre. Ebenso kann ein mit einem erfindungsgemäß ausgebildeten Terminal Adapter (TA) ausgestattetes Mobilfunk-Modul bzw. -Terminal an jede herkömmliche Steuereinrichtung angeschlossen werden, bspw. einen PC mit serieller Schnittstelle und einem Terminalprogramm zur Ansteuerung.

Das oben geschilderte Ausführungsbeispiel kann in vielfacher Weise modifiziert werden. Obwohl die Kommunikation zwischen einer erfindungsgemäßen Steuereinrichtung und einem Drahtlos-Modul bzw. -Terminal am Beispiel der AT-Schnittstelle bzw. GSM-Spezifikation 07.07 beschrieben wurde, kann auch ein anderes, für die Zwecke der Steuerung von Modulen geeignetes Protokoll, etwa ein proprietäres Protokoll, über eine serielle oder sonst wie geartete Schnittstelle zwischen Steuereinrichtung und Modul zum Einsatz kommen. Das Problem der geschützten Eingabe von PINs, insbesondere SIM-PINs, stellt sich dann in gleicher Weise.

Der Terminaladapter kann gemeinsam mit der Mobilfunkeinheit in einem Modul oder Terminal vorliegen. Ebenso kann aber auch ein Modul oder Terminal nur aus der Mobilfunkeinheit bestehen, so dass für die Ansteuerung ein externer Terminaladapter anzuschließen ist. Die Steuereinrichtung kann gemeinsam mit Adapter und/oder dem Modul, beispielsweise in oder in Zuordnung zu einem Automaten, einer Maschine oder dergleichen aus dem Anwendungsbereich von gattungsgemäßen Modulen bekannten Vorrichtungen vorliegen. Die Steuereinrichtung kann aber auch abgesetzt von dem Drahtlos-Modul bzw. -Terminal vorliegen. Es kann sich bei der Steuereinrichtung auch um einen PC oder dergleichen Computer handeln, an den permanent ein Terminalfenster angeschlossen ist, oder um ein System, in dem nur für Kontroll- bzw. Überprüfungszwecke ein Terminal angeschlossen wird. Gleiches gilt für den Anschluss eines Ereignisspeichers.

Das erfindungsgemäße Verfahren ist für beliebige Arten der Ausgabe von Befehlssequenzen geeignet. So ist es denkbar, auch für die Sprachausgabe bestimmte Befehlssequenzen in erfindungsgemäßer Weise zu maskieren bzw. schützen. Hierfür muss die Maskierungseinheit die zu maskierenden Zeichen einer PIN bzw. eines Passwortes durch solche (Steuer-)Zeichen ersetzen, die von einem an die Steuereinrichtung angeschlossenen Sprachausgabegerät als Platzhalter oder Leerzeichen erkannt und/oder entsprechend wiedergegeben wird, beispielsweise durch einen Summ- oder Piepston.

Darüber hinaus sind im Geltungsbereich der Erfindung, der ausschließlich durch die nachfolgenden Ansprüche angegeben wird, durch fachmännisches Handeln noch viele weitere Ausführungsformen denkbar.

**Bezugszeichenliste**

| | |
|---|---|
| 10 | Steuereinrichtung |
| 12 | Drahtlos-Modul |
| 14 | Mobilfunkeinheit |
| 16 | Terminaladapter |
| 18 | AT-Schnittstelle |
| 20 | Tastatur |
| 22 | Programmspeichereinheit |
| 24 | Messleitung |
| 26 | erste Empfangseinheit für AT-Schnittstelle |
| 28 | erste Umsetzungseinheit |
| 30 | erste Sendeeinheit |
| 32 | zweite Empfangseinheit für interne Statusmeldungen |
| 34 | zweite Umsetzungseinheit |
| 36 | zweite Sendeeinheit |
| 38 | Kopiereinheit |
| 40 | Maskierungseinheit |
| 42 | Terminal bzw. Anzeige |
| 44 | Ereignisspeicher |
| C1-C3 | AT-Kommandos |
| R1-R3 | AT-Antworten auf AT-Kommandos |

## Patentansprüche

1. Verfahren zur Ansteuerung eines Mobilfunkendgerätes, insbesondere in einem Drahtlos-Modul oder -Terminal, mit Rück- Übertragung von verwendeten Streuerbefehlen, bei dem eine über eine Steuertingsschnittstelle übertragene Steuerungs-Befehlssequenz als Einlese-Befehlssequenz in einen Terminaladapter eingelesen, umgesetzt und in Form von internen Steuerbefehlen an das Mobilfunkendgerät weitergeleitet wird und eine Echo-Befehlssequenz vom Terminaladapter über die Steuerungsschnittstelle rückübertragen wird, wobei die Echo-Befehlssequenz die Einlese-Befehlssequenz repräsentiert, um eine Überprüfung der Übertragung der Steuerungs-Befehissequenz an das Mobilfunkendgerät zu ermöglichen, wobei eine Kopier-Befehlssequenz als Kopie der Einfese-Befehissequenz erstellt wird und die Kopier-Befehlssequenz von einer Maskierungseinheit des Mobilfunkendgerätes bearbeitet wird, die die Kopier-Befehlssequenz auf eine vorgegebene kritische Zeichenfolge hin durchsucht, d a **durch gekennzeichnet,** dass in Reaktion auf den Nachweis der kritischen Zeichenfolge nach einem vorgegebenen Algorithmus mindestens ein Zeichen der Kopier-Befehlssequenz bestimmt, und
- das bestimmte Zeichen durch ein anderes vorgegebenes Maskierungszeichen ersetzt, und
- die solcherart maskierte Kopier-Befehlssequenz als Echo- Befehlssequenz zur Verfügung gestellt wird, in der innerhalb eines Befehls- mindestens ein Zeichen im Klartext und mindestens ein weiteres Zeichen maskiert dargestellt ist, und
- die Echo-Befehlssequenz so über die Steuerungsschnittstelle rückübertragen wird.

2. Verfahren nach Anspruch 1, **dadurch gekennzeichnet, dass** als kritische Zeichenfolge eine Zeichenfolge vorgegebene ist, der gemäß einer vorgegebenen Befehlssyntax für die Steuerungs-Befehlssequenz eine Identifizierungszeichenfolge in der Steuerungs-Befehlssequenz zugeordnet ist, wobei die identifizierungszeichenfolge insbesondere eine PIN oder ein Passwort für den Zugriff auf Funktionalitäten des Mobilfunkendgerätes betrifft.

3. Verfahren Anspruch 1 oder 2, **dadurch gekennzeichnet, dass** die Maskierungseinheit das oder jedes zu ersetzende Zeichen relativ zu der Position der kritischen Zeichenfolgen bestimmt, wobei insbesondere das oder jedes zu ersetzende Zeichen in der Kopier-Befehlssequenz der kritischen Zeichenfolge und ggf. bereits ersetzten Zeichen unmittelbar nachfolgt.

4. Verfahren nach Anspruch 2 oder 3, **dadurch gekennzeichnet, dass** die Maskierungseinheit als zu ersetzendes Zeichen ein Zeichen der Identifizierungszeichenfolge bestimmt.

5. Verfahren nach einem der vorhergehenden Ansprüche, **dadurch gekennzeichnet, dass** das Maskierungszeichen ein Platzhalterzeichen, insbesondere ein '*', ein Leerzeichen oder ein Länge-Null-Zeichen ist.

6. Verfahren nach einem der Ansprüche 2 bis 5, **dadurch gekennzeichnet, dass** in der Echo-Befehlssequenz innerhalb eines Befehls das Befehlsschlüsselwort im Klartext und die Identifizierungszeichenfolge maskiert dargestellt vverden.

7. Adaptereinrichtung für ein Mobilfunkendgerät, insbesondere in einem Drahtlos-Modul oder -Terminal, zur Umsetzung des Verfahrens nach einem der vorhergehenden Ansprüche, mit einer ersten Empfangseinheit, um eine über eine Steuerungsschnittstelle erhaltene Einlese-Befehlssequenz einzulesen, einer Umselzungseinheit, um Befehle aus der Einlese-Befehlssequenz. in Steuerbefehle umzusetzen, einer ersten Sendeeinheit, um die Steuerbefehl an eine Mobilfunkeinheit des Mobilfunkendgerätes zu übermitteln, einer Kopiereinheit, um eine Kopier-Befehlssequenz als Kopie der Einlese-Befehlssequenz zu erstellen, und einer zweiten Sendeeinheit, um eine die Kopier-Befehlssequenz repräsentierende Echo-Befehlssequenz über die Steuerungsschnittstelle zurück zu übertragen, **gekennzeichnet durch**
eine zwischen Kopiereinheit und zweiter Sendeeinheit geschaltete Maskierungeinheit mit
- einem Einleseblock, um die Kopier-Befehlssequenz einzulesen,
- einem Durchsuchungsblock, um die Kopier-Befehlssequenz auf eine vorgegebene kritischen Zeichenfolge hin zu durchsuchen,
- einem Zeichenbestimmungsblock, um in Reaktion auf den Nach- weis der kritischen Zeichenfolge nach einem vorgegebenen Algorithmus mindestens ein Zeichen der Kopier-Befehlssequenz zu bestimmen,
- einem Ersetzungsblock, um das bestimmte Zeichen in der Kopier-Befehlssequenz **durch** ein vorgegebenes Maskierungszeichen zu ersetzen, und um die solcherart maskierte Kopier-Befehlssequenz als Echo-Befehlssequenz in der innerhalb eines Befehls mindestens ein Zeichen im Klartext und mindestens ein weiteres Zeichen maskiert dargestellt ist, zur Verfügung zu stellen,
- einem Übergabeblock, um die Echo-Befehlssequenz so an die zweite Sendeeinheit zu übergeben.

## Claims

1. Method for the control of a mobile radio terminal, in particular in a wireless module or terminal, having back-transmission of applied control commands, in which a control command sequence transmitted by way of a control interface is read into a terminal adapter as an input command sequence, converted and routed on to the mobile radio terminal in the form of internal control commands, and an echo command sequence is transmitted back from the terminal adapter by way of the control interface, wherein the echo command sequence represents the input command sequence in order to render possible examination of the transmission of the control command sequence to the mobile radio terminal, wherein a copier command sequence is created as a copy of the input command sequence, and the copier command sequence is processed by a masking unit of the mobile radio terminal that searches through the copier command sequence for a preset critical character string,
**characterised in that** at least one character of the copier command sequence is determined in response to the detection of the critical character string according to a preset algorithm, and
- the determined character is replaced by a different preset masking character, and
- the copier command sequence that is masked in such a way is made available as an echo command sequence in which within a command at least one character is presented in plain text and at least one further character is presented in a masked form, and
- the echo command sequence is transmitted back thus by way of the control interface.

2. Method according to claim 1, **characterised in that** a character string is preset as a critical character string with which, in accordance with a preset command syntax for the control command sequence, an identification character string is associated in the control command sequence, wherein the identification character string relates in particular to a PIN or a password for access to functionalities of the mobile radio terminal.

3. Method claim 1 or 2,
**characterised in that** the masking unit determines the or each character that is to be replaced relative to the position of the critical character string, wherein in particular the or each character that is to be replaced in the copier command sequence directly follows the critical character string and, if applicable, characters that have already been replaced.

4. Method according to claim 2 or 3,
**characterised in that** the masking unit determines a character of the identification character string as a character that is to be replaced.

5. Method according to one of the preceding claims,
**characterised in that** the masking character is a wild-card character, in particular an "□", a blank character or a zero-length character.

6. Method according to one of claims 2 to 5,
**characterised in that** in the echo command sequence within a command the command keyword is presented in plain text, and the identification character string is presented in a masked form.

7. An adapter device for a mobile radio terminal, in particular in a wireless module or terminal, for implementation of the method according to one of the preceding claims, having a first receiving unit in order to read in an input command sequence obtained by way of a control interface, a conversion unit in order to convert commands from the input command sequence into control commands, a first transmitting unit in order to convey the control commands to a mobile radio unit of the mobile radio terminal, a copier unit in order to create a copier command sequence as a copy of the input command sequence, and a second transmitting unit in order to transmit back an echo command sequence, representing the copier command sequence, by way of the control interface,
**characterised by**
a masking unit connected between the copier unit and the second transmitting unit, having
- an input block in order to read in the copier command sequence,
- a searching block in order to search through the copier command sequence for a preset critical character string,
- a character-determination block in order to determine at least one character of the copier command sequence in response to the detection of the critical character string according to a preset algorithm,
- a replacement block in order to replace the determined character in the copier command sequence by a preset masking character and in order to make available the copier command sequence that is masked in such a way as an echo command sequence in which within a command at least one character is presented in plain text and at least one further character is presented in a masked form,
- a transfer block in order to transfer the echo command sequence thus to the second transmitting unit.

## Revendications

1. Procédé de commande d'un équipement terminal de téléphonie mobile, notamment dans un module sans fil ou dans un terminal sans fil, avec retransmission d'ordres de commande utilisés, dans lequel une séquence d'ordres de commande transmise par une interface de commande est lue comme séquence d'ordres de lecture dans un adaptateur de terminal, est transformée et est acheminée sous la forme d'ordres de commande internes vers l'équipement de terminal de téléphonie mobile et une séquence d'ordres d'écho est retransmise par l'adaptateur de terminal par l'intermédiaire de l'interface de commande, la séquence d'ordres d'écho représentant la séquence d'ordres de lecture, pour rendre possible un contrôle de la transmission de la séquence d'ordres de commande à l'équipement de terminal de téléphonie mobile, une séquence d'ordres de copie étant établie en tant que copie de la séquence d'ordres de lecture et la séquence d'ordres de copie étant traitée par une unité de masquage de l'équipement de terminal de téléphonie mobile, unité qui recherche dans la séquence d'ordres de copiage une suite de signes critique prescrite, **caractérisé en ce qu'**en réaction à la détection de la suite de signes prescrite, on détermine, suivant un algorithme prescrit, au moins un signe de la séquence d'ordres de copie, et
- on remplace le signe déterminé par un autre signe de masquage prescrit, et
- on met à disposition la séquence d'ordres de copie ainsi masquée comme séquence d'ordres d'écho, dans laquelle dans un ordre au moins un signe est représenté en clair et au moins un autre signe est représenté masqué, et
- on retransmet ainsi la séquence d'ordres d'écho par l'interface de commande.

2. Procédé suivant la revendication 1, **caractérisé en ce que** l'on prescrit comme suite de signes critique une suite de signes, à laquelle est affectée, suivant une syntaxe d'ordre prescrite pour la séquence d'ordres de commande, une suite de signes d'identification dans la séquence d'ordres de commande, la suite de signes d'identification concernant notamment un pin ou un mot de passe pour l'accès à des fonctionnalités de l'équipement de terminal de téléphonie mobile.

3. Procédé suivant la revendication 1 ou 2, **caractérisé en ce que** l'unité de masquage détermine le signe ou chaque signe à remplacer par rapport à la position de la suite de signes critique, notamment le ou chaque signe à remplacer suivant directement dans la séquence d'ordres de copie la suite de signes critique et, le cas échéant, des signes déjà remplacés.

4. Procédé suivant la revendication 2 ou 3, **caractérisé en ce que** l'unité de masquage détermine comme signe à remplacer un signe de la suite de signes d'identification.

5. Procédé suivant l'une des revendications précédentes, **caractérisé en ce que** l'unité de masquage est un signe de joker, notamment un *, un caractère espace ou un caractère de longueur nulle.

6. Procédé suivant l'une des revendications 2 à 5, **caractérisé en ce que**, dans la séquence d'ordres d'écho dans un ordre, le mot de chiffre d'ordre est représenté en clair et la suite de signes d'identification est représentée masquée.

7. Dispositif d'adaptateur pour un équipement de terminal de téléphonie mobile, notamment dans un module sans fil ou dans un terminal sans fil, pour la mise en oeuvre du procédé suivant l'une des revendications précédentes, comprenant une première unité de réception, pour lire une séquence d'ordres de lecture obtenue par une interface de commande, une unité de transformation, pour transformer des ordres de la séquence d'ordres de lecture en des ordres de commande, une première unité d'émission, pour transmettre les ordres de commande à une unité de téléphonie mobile de l'équipement de terminal de téléphonie mobile, une unité de copiage, pour établir une séquence d'ordres de copie comme copie de la séquence d'ordres de lecture, et une deuxième unité d'émission, pour retransmettre par l'interface de commande une séquence d'ordres d'écho représentant la séquence d'ordres de copie, **caractérisé par**
une unité de masquage, montée entre l'unité de copiage et la deuxième unité d'émission et comprenant
- un bloc de lecture, pour lire la séquence d'ordres de copie,
- un bloc de recherche, pour rechercher une suite de signes critique prescrite dans la séquence d'ordres de copie,
- un bloc de détermination de signes, pour, en réaction à la détection de la suite de signes critique, déterminer suivant un algorithme prescrit au moins un signe de la séquence d'ordres de copie,
- un bloc de remplacement, pour remplacer le signe déterminé dans la séquence d'ordres de copie par un signe de masquage prescrit, et pour mettre la séquence d'ordres de copie ainsi masquée à disposition comme séquence d'ordres d'écho, dans laquelle dans un ordre, au moins un signe est représenté en clair et au moins un autre signe est masqué,
- un bloc de transmission, pour transmettre la séquence d'ordres d'écho à la deuxième unité d'émission.
